# EUROPÄISCHE PATENTSCHRIFT

(11) **EP 2 495 190 B1**
(45) Veröffentlichungstag und Bekanntmachung des Hinweises auf die Patenterteilung: **05.06.2013**
(21) Anmeldenummer: 11157022.2
(22) Anmeldetag: 04.03.2011
(51) Int. Cl.: B65G 25/02, B65G 47/82

(54) **Vorrichtung zum geradlinigen Transport aufrecht stehender Behälter**
Device for transporting standing containers in a straight line
Dispositif de transport rectiligne de récipients verticaux

(43) Veröffentlichungstag der Anmeldung: 05.09.2012
(73) Patentinhaber: UHLMANN PAC-SYSTEME GmbH & Co. KG, 88471 Laupheim (DE)
(72) Erfinder: Liebhardt, Jürgen, 88471, Laupheim (DE); Kronawitter, Michael, 89179, Beimerstetten (DE); Heim, Ralf, 88471, Laupheim (DE)
(74) Vertreter: Wächter, Jochen

(56) Entgegenhaltungen:
- WO-A1-01/70570
- DE-B- 1 221 570
- US-A- 4 039 073

## Beschreibung

Die vorliegende Erfindung betrifft eine Vorrichtung zum geradlinigen Transport aufrecht stehender Behälter nach dem Oberbegriff von Anspruch 1.

In der pharmazeutischen Industrie werden aufrecht stehende Behälter, wie zum Beispiel Fläschchen aus Kunststoff oder einem anderen geeigneten Material, an verschiedenen Stationen mit Tabletten, Kapseln oder Dragees gefüllt, mit Watte bedeckt und mit einer Kappe verschlossen. Vor, zwischen und nach den Stationen werden die Behälter auf verschiedene Weisen kontinuierlich oder getaktet mittels Transportvorrichtungen vorwärtsbewegt.

Beispiele für derartige Transportvorrichtungen sind Schneckenförderer, die eine kontinuierliche Bewegung der Behälter gewährleisten. Hierbei sind die Behälter in Nuten der Schnecke aufgenommen und wandern mit der Schneckenbewegung mit. Dabei müssen entweder zwei Schnecken, die sich gegensinnig, aber gleich schnell drehen und die Behälter zwischen sich einschließen, vorgesehen sein, oder es kann auch lediglich eine Schnecke vorgesehen sein, die angrenzend an eine glatte Gegenhaltefläche angeordnet ist, wobei die Behälter zwischen der Schnecke und der Gegenhaltefläche eingeklemmt sind und an der Gegenhaltefläche entlang gefördert werden. Ein Beispiel für einen Schneckenförderer ist aus EP 2 006 204 A1 bekannt.

Bei Schneckenförderern ist einerseits problematisch, dass ein getakteter Betrieb, der beispielsweise für die Befüllung der Behälter vorteilhaft ist, nicht möglich ist. Außerdem müssen bei Formatänderungen der transportierten Behälter die Schnecken als Formatteile ausgetauscht werden oder zumindest der Abstand zwischen den beiden Schnecken oder zwischen Schnecke und Gegenhaltefläche neu justiert werden.

DE 1 221 570 beschreibe eine gattungsgemäße Schiebeeinrichtung.

Der vorliegenden Erfindung liegt die Aufgabe zugrunde, eine Vorrichtung zum geradlinigen Transport aufrecht stehender Behälter zu schaffen, die einfach aufgebaut ist, für einen getakteten Betrieb verwendet werden kann und gleichzeitig auf verschiedene Behältergrößen variabel einstellbar ist.

Diese Aufgabe wird durch die Merkmale des Anspruchs 1 gelöst.

Erfindungsgemäß weist die Vorrichtung zum geradlinigen Transport aufrecht stehender Behälter in einer Transportrichtung einen Schieberechen auf, der an einer ersten Längsseite mehrere in Transportrichtung nebeneinander in Reihe angeordnete, nach außen offene Aufnahmen für die Behälter aufweist, sowie ein Gegenhalteelement für die in den Aufnahmen aufgenommenen Behälter, das eine Gegenhaltefläche aufweist, die in Transportrichtung verläuft und gegenüber der ersten Längsseite des Schieberechens angeordnet ist. Der Schieberechen ist dabei über mindestens zwei Gelenksysteme mit einem ersten Antrieb und einem zweiten Antrieb verbunden, wobei jedes Gelenksystem einen ersten Schenkel und einen zweiten Schenkel aufweist, die jeweils über einen ersten Verbindungspunkt des ersten Schenkels und über einen ersten Verbindungspunkt des zweiten Schenkels ortsfest, aber drehbar mit dem Schieberechen verbunden sind. Der erste Schenkel ist über einen zweiten Verbindungspunkt drehbar mit einem ersten Verschiebungselement verbunden, das vom ersten Antrieb linear in Transportrichtung hin- und herverschiebbar ist, und der zweite Schenkel ist über einen zweiten Verbindungspunkt drehbar mit einem zweiten Verschiebungselement verbunden, das vom zweiten Antrieb linear in Transportrichtung hin-und herverschiebbar ist. Dabei sind das erste Verschiebungselement und das zweite Verschiebungselement mittels des ersten Antriebs und des zweiten Antriebs für entweder eine identische gleichgerichtete Bewegung oder für eine Relativbewegung zueinander antreibbar, so dass der Schieberechen sowohl in der Transportrichtung der Behälter als auch senkrecht zur Transportrichtung der Behälter hin- und herverschiebbar ist.

Auf diese Weise wird eine Vorrichtung geschaffen, die eine getaktete Bewegung der Behälter auf einfache Weise gewährleistet und eine wenig aufwändige Anpassung an verschiedene Formate der Behälter ermöglicht.

Die Bewegung des Schieberechens in Transportrichtung zum Transportieren der Behälter und entgegen der Transportrichtung zum Rückführen des Schieberechens zur erneuten Behälteraufnahme ist durch identisches Verschieben des ersten und zweiten Verschiebungselements erzeugbar. Auf diese Weise werden die in den Aufnahmen des Schieberechens aufgenommenen Behälter gleichmäßig vorwärts transportiert, während die Rückfahrt des leeren Schieberechens ebenfalls gleichmäßig vonstatten geht.

Die Bewegung des Schieberechens senkrecht zur Transportrichtung zwischen einer Schließstellung und einer Öffnungsstellung des Schieberechens hingegen ist durch unterschiedliches Verschieben des ersten und zweiten Verschiebungselements erzeugbar.

Durch die unterschiedliche Verschiebung der beiden Verschiebungselemente werden die beiden Schenkel im Bereich der zweiten Verbindungspunkte relativ zueinander bewegt, also auseinander oder aufeinander zu, wodurch eine Verstellung der seitlichen Lage des Schieberechens erfolgt. Idealerweise erfolgt das unterschiedliche Verschieben des ersten und zweiten Verschiebungselements in entgegengesetzter Richtung und über dieselbe Wegstrecke, wodurch eine symmetrische Auseinanderbewegung bzw. Zueinanderbewegung der zweiten Verbindungspunkte stattfindet.

In der Schließstellung des Schieberechens liegen die zweiten Verbindungspunkte des ersten Schenkels und des zweiten Schenkels vorzugsweise enger aneinander als in der Öffnungsstellung des Schieberechens. Dadurch ist der Schieberechen in seiner Schließstellung näher an der Gegenhaltefläche angeordnet als in seiner Öffnungsstellung.

In einer bevorzugten Ausführungsform können die ersten und zweiten Schenkel im Wesentlichen geradlinig verlaufen und zwischen sich einen Winkel einschließen, der sich in Richtung der zweiten Verbindungspunkte öffnet. Auf diese Weise wird eine Konstruktion geschaffen, die einfach und stabil aufgebaut ist und eine gut steuerbare Verschiebung des Schieberechens quer zur Transportrichtung erlaubt. Außerdem wird die Stabilität des Schieberechens beim schnellen Transport von Behältern durch diese Winkelgeometrie gewährleistet.

Vorzugsweise liegt der Winkel in der Schließstellung zwischen 50° und 80° und in der Öffnungsstellung zwischen 70° und 100°, wobei der Winkel in der Öffnungsstellung bevorzugt immer größer ist als der Winkel in der Schließstellung. Diese Winkel haben sich konstruktiv als besonders stabil erwiesen in der Hinsicht, dass sowohl für die beladene Fahrt des Schieberechens in seiner Schließstellung als auch für die Rückfahrt des leeren Schieberechens in seiner Öffnungsstellung auch bei hohen Geschwindigkeiten eine ausreichende Steifigkeit und Robustheit vorhanden ist.

In einer bevorzugten Ausführungsform weist das erste Verschiebungselement eine erste Schiebestange und das zweite Verschiebungselement eine zweite Schiebestange auf. Diese parallel angeordneten Schiebestangen ermöglichen eine gleichzeitige Einstellung der mindestens zwei in einem beträchtlichen Abstand angeordneten Gelenksysteme, indem jedes Gelenksystem jeweils mit denselben Schiebestangen, aber an verschiedenen Befestigungsstellen, verbunden ist.

Ein relativ einfacher und gleichzeitig genauer Übertragungsmechanismus des Antriebs auf die Schiebestangen wird dadurch erzielt, dass die erste Schiebestange über Verbindungsmittel an einem umlaufenden ersten Riemen fixiert ist, der mit dem ersten Antrieb antreibbar ist, und dass die zweite Schiebestange über Verbindungsmittel an einem umlaufenden zweiten Riemen fixiert ist, der mit dem zweiten Antrieb antreibbar ist.

Zur sicheren Führung der Gelenksysteme ist vorzugsweise zwischen dem ersten Schenkel und der ersten Schiebestange ein erster Schlitten angeordnet, der fest mit der ersten Schiebestange verbunden ist und drehbar mit dem ersten Schenkel verbunden ist. Ebenso ist vorzugsweise zwischen dem zweiten Schenkel und der zweiten Schiebestange ein zweiter Schlitten angeordnet, der fest mit der zweiten Schiebestange verbunden ist und drehbar mit dem zweiten Schenkel verbunden ist.

Der erste Schlitten und der zweite Schlitten können entweder in zwei parallel in Transportrichtung verlaufenden Führungen geführt sein, oder sie können in derselben in Transportrichtung verlaufenden Führung geführt sein. Letzteres hat den Vorteil, dass symmetrische Schenkelanordnungen verwendet werden können und weniger Tiefe benötigt wird.

Eine möglichst exakte und sichere Ansteuerung der Gelenksysteme und damit des Schieberechens erhält man, wenn der erste Antrieb und der zweite Antrieb Servomotoren sind.

Neben der variablen Verstellbarkeit des Schieberechens quer zur Transportrichtung ist es für eine Anpassung an unterschiedliche Behältergrößen von Vorteil, wenn die Aufnahmen im Wesentlichen dreieckförmige Aufnahmen sind, die sich nach außen verbreitern.

Als besonders vorteilhaft hat sich dabei ein Winkel von zwischen 90° und 110° zwischen den beiden Seitenwänden der Aufnahmen herausgestellt.

Weitere Einzelheiten und Vorteile der vorliegenden Erfindung ergeben sich aus der nachfolgenden Beschreibung unter Bezugnahme auf die Zeichnungen.
- Fig. 1: ist eine schematische Perspektivansicht einer bevorzugten Ausführungsform der erfindungsgemäßen Vorrichtung zum geradlinigen Transport aufrecht stehender Behälter;

- Fig. 2: ist eine schematische Perspektivansicht eines Ausschnitts der Ausführungsform aus Fig. 1 in einer Schließstellung des Schieberechens;
- Fig. 3: ist eine schematische Perspektivansicht eines Ausschnitts der Ausführungsform aus Fig. 1 in einer Öffnungsstellung des Schieberechens;
- Fig. 4: ist eine schematische Perspektivansicht von unten auf einen Ausschnitt der An-triebskonstruktion zur Ausführungsform aus Fig. 1; und
- Fig. 5 bis 7: sind schematische Perspektivansichten auf einen Ausschnitt des Schiebere-chens in jeweils unterschiedlichen Einbausituationen der Halteteile.

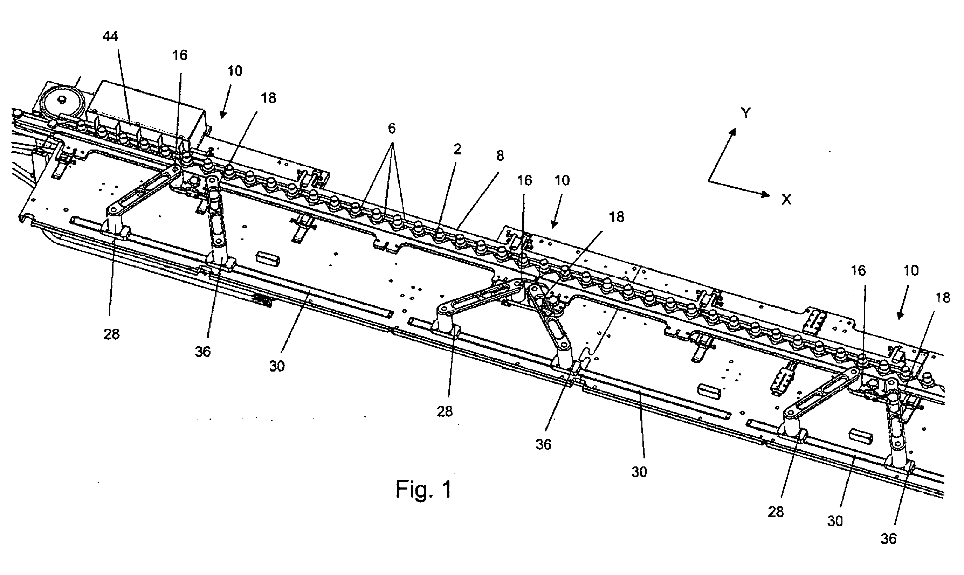

In Fig. 1 bis 7 ist eine bevorzugte Ausführungsform einer erfindungsgemäßen Vorrichtung zum geradlinigen Transport aufrecht stehender Behälter dargestellt. Die Behälter stehen dabei auf einer nicht dargestellten Auflagefläche, vorzugsweise einer Gleitfläche, oder aber auf einem intermittierend mitbewegten Transportband.

Die Vorrichtung weist einen Schieberechen 2 auf, der an einer ersten Längsseite mehrere in Transportrichtung (Pfeil X) nebeneinander in Reihe angeordnete, nach außen offene Aufnahmen 4 für die Behälter 6 aufweist. Die Behälter 6 können aus unterschiedlichen Materialien gebildet sein. Die Aufnahmen 4 sind vorzugsweise im wesentlichen dreieckförmig und verbreitern sich nach außen hin, wodurch die flexible Verwendung des Schieberechens 2 für Behälter 6 unterschiedlicher Größen und Formen möglich ist. Die beiden Seitenwände der Aufnahmen 4 schließen dabei vorzugsweise einen Winkel von zwischen 90° und 110° ein. Ebenso ist es jedoch möglich, dass die Aufnahmen 4 spezieller an die Form der Behälter 6 angepasst sind und eine von der Dreieckform abweichende Form aufweisen, etwa eine ovale Form oder eine mehreckige Form.

Um eine sichere Führung der Behälter 6 mit Hilfe des Schieberechens 2 zu gewährleisten, ist ein Gegenhalteelement 8 für die in den Aufnahmen 4 aufgenommenen Behälter 6 vorgesehen, das eine Gegenhaltefläche aufweist, die in Transportrichtung verläuft und gegenüber der ersten Längsseite des Schieberechens 2 angeordnet ist. Die Gegenhaltefläche des Gegenhalteelements 8 ist vorzugsweise aus einem Material geringer Reibfähigkeit gebildet und vollständig eben ausgestaltet.

Der Schieberechen 2 kann einteilig oder mehrteilig sein, besteht vorzugsweise aus Edelstahlblech und ist über mindestens zwei, im dargestellten Beispielsfall drei Gelenksysteme 10 mit einem ersten Antrieb 12 und einem zweiten Antrieb 14 verbunden. Jedes Gelenksystem 10 weist einen ersten Schenkel 16 und einen zweiten Schenkel 18, vorzugsweise aus Aluminium, auf, die jeweils über einen ersten Verbindungspunkt 20 des ersten Schenkels 16 und über einen ersten Verbindungspunkt 22 des zweiten Schenkels 18 drehbar mit dem Schieberechen 2 verbunden sind. Trotz ihrer Drehbarkeit sind die beiden ersten Verbindungspunkte 20, 22 bezüglich des Schieberechens 2 stationär bzw. ortsfest ausgebildet. Die Verbindungspunkte 20, 22 befinden sich vorzugsweise in einem ersten Endbereich der Schenkel 16, 18.

Im dargestellten Beispielsfall liegen die beiden ersten Verbindungspunkte 20, 22 relativ eng aneinander, es können aber auch viele andere Geometrien vorliegen. Beispielsweise könnten beide erste Verbindungspunkte 20, 22 eine gemeinsame Drehachse definieren, oder die ersten Verbindungspunkte 20, 22 könnten in einem größeren Abstand zueinander oder quer zur Transportrichtung zueinander versetzt angeordnet sein.

Der erste und zweite Schenkel 16, 18 sind im dargestellten Beispielsfall im Wesentlichen geradlinig ausgebildet und besitzen identische Abmessungen. Es können aber auch nahezu beliebige andere Formen der Schenkel 16, 18 verwendet werden, um das erfindungsgemäße Prinzip umzusetzen.

Der erste Schenkel 16 ist über einen zweiten Verbindungspunkt 24 drehbar mit einem ersten Verschiebungselement verbunden, das vom ersten Antrieb 12 linear in Transportrichtung hin- und herverschiebbar ist. Das erste Verschiebungselement umfasst in der dargestellten Ausführungsform eine erste Schiebestange 26 und einen ersten Schlitten 28, es können aber auch andere Konstruktionen verwendet werden.

Im dargestellten Beispielsfall erfolgt die Verbindung zwischen erstem Schenkel 16 und erster Schiebestange 26 nicht unmittelbar, sondern durch Zwischenschaltung des ersten Schlittens 28, der in einer in Transportrichtung verlaufenden Führung 30 geführt ist. Der erste Schlitten 28 ist wiederum fest mit der ersten Schiebestange 26 verbunden und drehbar mit dem ersten Schenkel 16 verbunden.

Auf identische Weise ist der zweite Schenkel 18 über einen zweiten Verbindungspunkt 32 drehbar mit einem zweiten Verschiebungselement verbunden, das in der hier dargestellten Ausführungsform eine zweite Schiebestange 34 und einen zweiten Schlitten 36 aufweist. Hierbei ist der zweite Schenkel 18 drehbar mit dem zweiten Schlitten 36 verbunden, der wiederum mit der zweiten Schiebestange 34 fest verbunden ist. Der zweite Schlitten 36 ist ebenfalls in der Führung 30 geführt, kann allerdings auch in einer separaten Führung geführt sein. In dieser hier nicht dargestellten Ausführungsform würden dann der erste Schlitten 28 und der zweite Schlitten 36 in zwei parallel in Transportrichtung verlaufenden Führungen 30 geführt sein, und die Schenkel 16, 18 hätten eine unterschiedliche Länge.

Die beiden zweiten Verbindungspunkte 24, 32 sind vorzugsweise in einem zweiten Endbereich der Schenkel 16, 18 angeordnet, der dem ersten Endbereich gegenüberliegt.

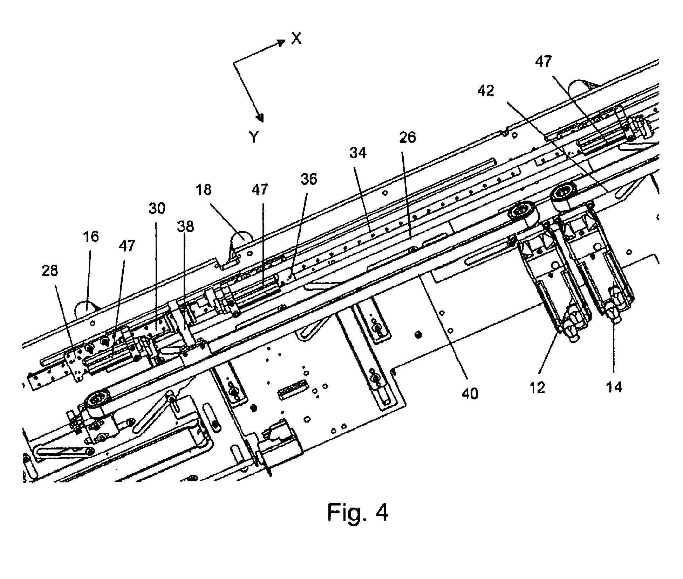

Wie am besten aus Fig. 4 hervorgeht, ist die erste Schiebestange 26 über Verbindungsmittel 38, im vorliegenden Fall Verbindungsklammern, an einem umlaufenden ersten Riemen 40 fixiert, der mit dem ersten Antrieb 12 antreibbar ist. Ebenso ist die zweite Schiebestange 34 über Verbindungsmittel (nicht dargestellt) an einem umlaufenden zweiten Riemen 42 fixiert, der mit dem zweiten Antrieb 14 antreibbar ist. Selbstverständlich existieren für die Verbindung zwischen den Schiebestangen 26, 34 und den Antrieben 12, 14 einige weitere vom Fachmann in Betracht zu ziehende Möglichkeiten. Die beiden Antriebe 12, 14 sind vorzugsweise als Servomotoren ausgebildet, um eine exakte Steuerung der Hin- und Herbewegung der beiden Schiebestangen 26, 34 zu gewährleisten.

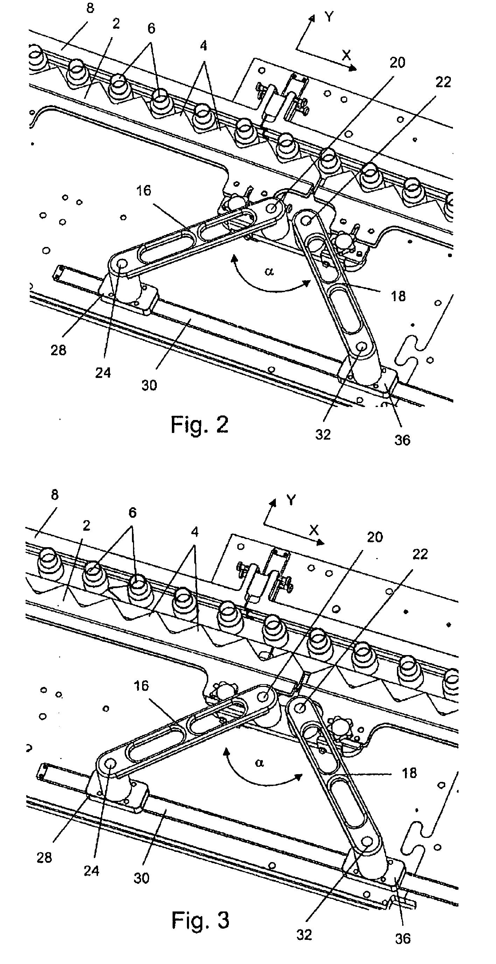

In der dargestellten bevorzugten Ausführungsform mit zwei gleich langen Schenkeln 16, 18 schließen die beiden Schenkel 16, 18 zwischen sich einen Winkel α ein, der sich in Richtung der zweiten Verbindungspunkte 24, 32 hin öffnet. In der in Fig. 2 dargestellten Schließstellung des Schieberechens 2 liegt dieser Winkel α zwischen 50° und 80°, und in der in Fig. 3 dargestellten Öffnungsstellung des Schieberechens 2 liegt dieser Winkel α zwischen 70° und 100°, wobei der Winkel α in der Öffnungsstellung immer größer ist als in der Schließstellung.

Mit anderen Worten bedeutet dies, dass die beiden Schlitten 28, 36 zum Erzielen der Schließstellung des Schieberechens 2 näher zueinander geschoben werden, während sie zum Erzielen der Öffnungsstellung des Schieberechens 2 weiter auseinander geschoben werden. Durch die Hebelkinematik wird dadurch eine Hin- und Herbewegung des Schieberechens 2 quer zur Transportrichtung, also in Richtung des Pfeils Y, erzeugt, indem die beiden Schiebestangen 26, 34 relativ zueinander verschoben werden.

Unter Bezugnahme auf Fig. 1 soll nun der Betrieb der erfindungsgemäßen Vorrichtung beschrieben werden. Zunächst werden in einer Einführstation 44 eine Reihe von Behältern 6 im richtigen Abstand zueinander bereitgestellt. Der Schieberechen 2 wird daraufhin in die Schließstellung gefahren, wodurch die Behälter 6 in den Aufnahmen 4 des Schieberechens 2 aufgenommen werden und auf der gegenüberliegenden Seite durch das Gegenhalteelement 8 geführt werden. Durch gleichmäßige Bewegung der beiden Antriebe 12, 14 und damit unter Aufrechterhaltung der Positionen der ersten und zweiten Schenkel 16, 18 eines jeden Gelenksystems 10 wird anschließend der Schieberechen 2 über ein vorbestimmtes Intervall in Transportrichtung X verschoben, wodurch auch die Behälter 6 um den entsprechenden Fahrweg verschoben werden.

Wenn die gewünschte Zwischenstellung erreicht ist, wird der Schieberechen 2 von der Schließstellung in die Öffnungsstellung gebracht, indem die beiden Schiebestangen 26, 34 in entgegengesetzter Richtung bewegt werden. In dieser in Fig. 3 dargestellten Öffnungsstellung wird der Schieberechen 2 anschließend wieder zur Einführstation 44 zurückgefahren, indem die beiden Schiebestangen 26, 34 mit derselben Geschwindigkeit in dieselbe Richtung zurückbewegt werden. Anschließend beginnt der Kreislauf wieder von vorne, indem der Schieberechen 2 von der Öffnungsstellung in die Schließstellung gebracht wird. So werden die Behälter 6 schrittweise von der Einführstation 44 hin zu einer nicht dargestellten Abgabestation transportiert. Der maximale Transportweg wird durch die Länge des Schieberechens 2 bestimmt.

Neben der dargestellten symmetrischen Anordnung der beiden Schenkel 16, 18 ist auch eine Vielzahl anderer, nicht symmetrischer Anordnungen denkbar, beispielsweise könnte ein Schenkel 16, 18 kürzer als der andere Schenkel 16, 18 ausgestaltet sein und die beiden Schenkel 16, 18 könnten beispielsweise auch in Schlitten 28, 36 geführt sein, die auf gegenüberliegenden Seiten der Transportbahn für die Behälter 6 geführt sind. In diesem Fall würden die beiden Schenkel 16, 18 einen größeren Winkel zwischen sich einschließen.

Die dargestellte Form mit drei Gelenksystemen 10 ist für eine Gesamtlänge des Schieberechens 2 von ca. vier Metern besonders gut geeignet. Je nach Länge des Schieberechens 2 können aber auch mehr Gelenksysteme 10 notwendig sein, in jedem Fall aber benötigt man immer mindestens zwei Gelenksysteme 10.

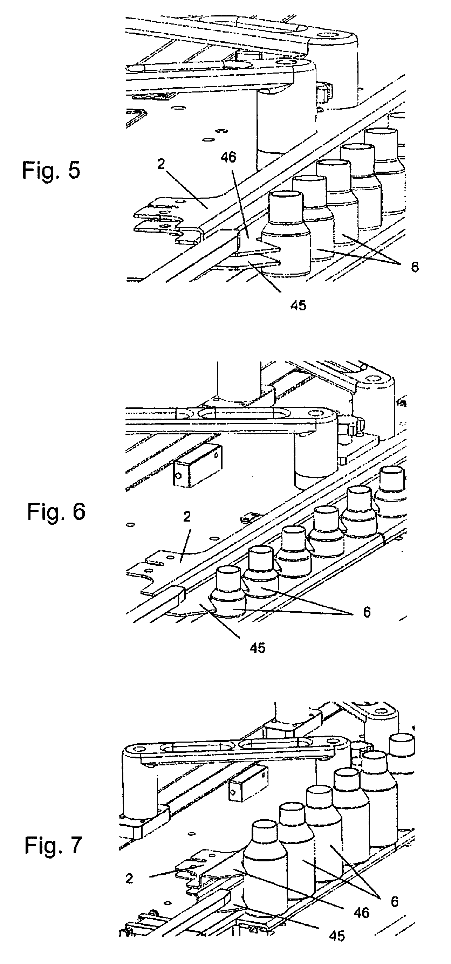

Aus Fig. 5 ist ersichtlich, dass die Aufnahmen durch ein oberes Halteteil 46 und ein unteres Halteteil 45 des Schieberechens 2 gebildet sein können. Für kleinere Behälter 6 kann das obere Teil 46 abgenommen werden (siehe Fig. 6), während es für größere Behälter 6 auch umgedreht eingebaut sein kann, um den oberen Bereich des Behälters 6 zu umfassen (siehe Fig. 7).

Schließlich kann, wie aus Fig. 4 hervorgeht, zum Schutz des Schieberechens 2 und dessen Antriebselementen ein nachgiebiges Element 47, vorzugsweise eine pneumatische Feder, zwischen Schiebestange 26, 34 und Schlitten 28, 36 angeordnet sein. So kann eine eventuell auftretende Überlast durch verklemmte Behälter 6 gepuffert werden, bevor die Antriebe 12, 14 automatisch abgeschaltet werden.

Mit der erfindungsgemäßen Konstruktion ist es möglich, 150 Behälter pro Minute intermittierend zu transportieren. Ebenfalls ist eine Taktung mit variabler Leistung für unterschiedliche Behälterformen und -größen einstellbar.

## Patentansprüche

1. Vorrichtung zum geradlinigen Transport aufrecht stehender Behälter (6) in einer Transportrichtung (X), mit:
einem Schieberechen (2), der an einer ersten Längsseite mehrere in Transportrichtung (X) nebeneinander in Reihe angeordnete, nach außen offene Aufnahmen (4) für die Behälter (6) aufweist, und
mindestens zwei Gelenksystemen (10), wobei jedes Gelenksystem (10) einen ersten Schenkel (16) und einen zweiten Schenkel (18) aufweist, die jeweils über einen ersten Verbindungspunkt (20) des ersten Schenkels (16) und über einen ersten Verbindungspunkt (22) des zweiten Schenkels (18) ortsfest, aber drehbar mit dem Schieberechen (2) verbunden sind,
**dadurch gekennzeichnet, dass**
ein Gegenhalteelement (8) für die in den Aufnahmen (4) aufgenommenen Behälter (6) vorgesehen ist, das eine Gegenhaltefläche aufweist, die in Transportrichtung (X) verläuft und gegenüber der ersten Längsseite des Schieberechens (2) angeordnet ist,
wobei der Schieberechen (2) über die mindestens zwei Gelenksysteme (10) mit einem ersten Antrieb (12) und einem zweiten Antrieb (14) verbunden ist,
wobei der erste Schenkel (16) über sinen zweiten Verbindungspunkt (24) drehbar mit einem ersten Verschiebungselement (26, 28) verbunden ist, das vom ersten Antrieb (12) linear in Transportrichtung (X) hin- und herverschiebbar ist,
wobei der zweite Schenkel (18) über einen zweiten Verbindungspunkt (32) drehbar mit einem zweiten Verschiebungselement (34, 36) verbunden ist, das vom zweiten Antrieb (14) linear in Transportrichtung (X) hin- und herverschiebbar ist, und
wobei das erste Verschiebungselement (26, 28) und das zweite Verschiebungselement (34, 36) mittels des ersten Antriebs (12) und des zweiten Antriebs (14) für entweder eine identische gleichgerichtete Bewegung oder für eine Relativbewegung zueinander antreibbar sind, so dass der Schieberechen (2) sowohl in der Transportrichtung (X) der Behälter (6) als auch senkrecht (Y) zur Transportrichtung der Behälter (6) hin- und herverschiebbar ist.

2. Vorrichtung nach Anspruch 1, **dadurch gekennzeichnet, dass** die Bewegung des Schieberechens (2) in Transportrichtung (X) zum Transportieren der Behälter (6) und entgegen der Transportrichtung (X) zum Rückführen des Schieberechens (2) zur erneuten Behälteraufnahme durch identisches Verschieben des ersten Verschiebungselements (26, 28) und des zweiten Verschiebungselements (34, 36) erzeugbar ist.

3. Vorrichtung nach Anspruch 2, **dadurch gekennzeichnet, dass** die Bewegung des Schieberechens (2) senkrecht (Y) zur Transportrichtung zwischen einer Schließstellung und einer Öffnungsstellung des Schieberechens (2) durch unterschiedliches Verschieben des ersten Verschiebungselements (26, 28) und des zweiten Verschiebungselements (34, 36) erzeugbar ist.

4. Vorrichtung nach Anspruch 3, **dadurch gekennzeichnet, dass** in der Schließstellung des Schieberechens (2) die zweiten Verbindungspunkte (24, 32) des ersten Schenkels (16) und des zweiten Schenkels (18) enger aneinander liegen als in der Öffnungsstellung des Schieberechens (2).

5. Vorrichtung nach Anspruch 3 oder 4, **dadurch gekennzeichnet, dass** die ersten Schenkel (16) und die zweiten Schenkel (18) im wesentlichen geradlinig verlaufen und zwischen sich einen Winkel (α) einschließen, der sich in Richtung der zweiten Verbindungspunkte (24, 32) öffnet.

6. Vorrichtung nach Anspruch 5, **dadurch gekennzeichnet, dass** der Winkel (α) in der Schließstellung zwischen 50° und 80° liegt und in der Öffnungsstellung zwischen 70° und 100° liegt, wobei der Winkel (α) in der Öffnungsstellung immer größer ist als in der Schließstellung.

7. Vorrichtung nach einem der Ansprüche 2 bis 6, **dadurch gekennzeichnet, dass** das erste Verschiebungselement (26, 28) eine erste Schiebestange (26) und das zweite Verschiebungselement (34,36) eine zweite Schiebestange (34) aufweist.

8. Vorrichtung nach Anspruch 7, **dadurch gekennzeichnet, dass** die erste Schiebestange (26) über Verbindungsmittel (38) an einem umlaufenden ersten Riemen (40) fixiert ist, der mit dem ersten Antrieb (12) antreibbar ist, und dass die zweite Schiebestange (34) über Verbindungsmittel (38) an einem umlaufenden zweiten Riemen (42) fixiert ist, der mit dem zweiten Antrieb (14) antreibbar ist.

9. Vorrichtung nach Anspruch 7 oder 8, **dadurch gekennzeichnet, dass** zwischen dem ersten Schenkel (16) und der ersten Schiebestange (26) ein erster Schlitten (28) angeordnet ist, der fest mit der ersten Schiebestange (26) verbunden ist und drehbar mit dem ersten Schenkel (16) verbunden ist, und dass zwischen dem zweiten Schenkel (18) und der zweiten Schiebestange (34) ein zweiter Schlitten (36) angeordnet ist, der fest mit der zweiten Schiebestange (34) verbunden ist und drehbar mit dem zweiten Schenkel (18) verbunden ist.

10. Vorrichtung nach Anspruch 9, **dadurch gekennzeichnet, dass** der erste Schlitten (28) und der zweite Schlitten (36) in zwei parallel in Transportrichtung (X) verlaufenden Führungen (30) geführt sind.

11. Vorrichtung nach Anspruch 9, **dadurch gekennzeichnet, dass** der erste Schlitten (28) und der zweite Schlitten (36) in derselben in Transportrichtung (X) verlaufenden Führung (30) geführt sind.

12. Vorrichtung nach einem der Ansprüche 2 bis 11, **dadurch gekennzeichnet, dass** der erste Antrieb (12) und der zweite Antrieb (14) Servomotoren sind.

13. Vorrichtung nach einem der Ansprüche 2 bis 12, **dadurch gekennzeichnet, dass** die Aufnahmen (4) im wesentlichen dreieckförmige Aufnahmen (4) sind, die sich nach außen verbreitern.

14. Vorrichtung nach Anspruch 13, **dadurch gekennzeichnet, dass** die beiden Seitenwände der Aufnahmen (4) einen Winkel von zwischen 90° und 110° einschließen.

## Claims

1. Device for transporting upright containers (6) in a straight line in a transport direction (X), comprising a rake conveyor (2), which comprises, on a first long side thereof, a plurality of retainers (4) for the containers (6), which retainers are arranged next to each other in a row in the transport direction (X) and are open towards the outside, and at least two joint systems (10), wherein each joint system (10) comprises a first arm (16) and a second arm (18), each connected in a stationary but rotatable manner to the rake conveyor (2) via a first connecting point (20) of the first arm (16), and via a first connecting point (22) of the second arm (18), **characterised in that** an opposing support element (8) is provided for the containers (6) received in the retainers (4), said support element comprising an opposing support surface which extends in the transport direction (X) and is arranged opposite the first long side of the rake conveyor (2), the rake conveyor (2) being connected to a first drive (12) and a second drive (14) via the at least two joint systems (10), the first arm (16) being rotatably connected via a second connecting point (24) to a first displacement element (26, 28) which can be displaced back and forth in a straight line in the transport direction (X) by the first drive (12), the second arm (18) being rotatably connected via a second connecting point (32) to a second displacement element (34, 36) which can be displaced back and forth in a straight line in the transport direction (X) by the second drive (14), and the first displacement element (26, 28) and the second displacement element (34, 36) being able to be driven by the first drive (12) and the second drive (14) either for an identical movement in the same direction, or for a relative movement with respect to each other, such that the rake conveyor (2) can be displaced back and forth both in the transport direction (X) of the containers (6) and in a direction perpendicular (Y) to the transport direction of the containers (6).

2. Device according to claim 1, **characterised in that** the movement of the rake conveyor (2) in the transport direction (X) to transport the containers (6), and in a direction opposite the transport direction (X) to return the rake conveyor (2) to pick up a new set of containers can be achieved by displacing the first displacement element (26, 28) and the second displacement element (34, 36) in an identical manner.

3. Device according to claim 2, **characterised in that** the movement of the rake conveyor (2) in the direction perpendicular (Y) to the transport direction between a closed position and an open position of the rake conveyor (2) can be achieved by displacing the first displacement element (26, 28) and the second displacement element (34, 36) in different manners.

4. Device according to claim 3, **characterised in that** the second connecting points (24, 43) of the first arm (16) and of the second arm (18) lie closer to each other in the closed position of the rake conveyor (2) than in the open position of the rake conveyor (2).

5. Device according to either claim 3 or claim 4, **characterised in that** the first arm (16) and the second arm (18) extend substantially in a straight line and enclose an angle (α) which opens out in the direction of the second connecting points (24, 32).

6. Device according to claim 5, **characterised in that** the angle (α) is in the range of between 50° and 80° in the closed position, and in the range of between 70° and 100° in the open position, the angle (α) always being greater in the open position than in the closed position.

7. Device according to any of claims 2 to 6, **characterised in that** the first displacement element (26, 28) comprises a first slide rod (26) and the second displacement element (34, 36) comprises a second slide rod (34).

8. Device according to claim 7, **characterised in that** the first slide rod (26) is fixed via connecting means (38) to a revolving first belt (40) which can be driven by the first drive (12), and **in that** the second slide rod (34) is fixed via connecting means (38) to a revolving second belt (42) which can be driven by the second drive (14).

9. Device according to either claim 7 or claim 8, **characterised in that**, between the first arm (16) and the first slide rod (26), a first slide (28) is arranged, which is rigidly connected to the first slide rod (26) and rotatably connected to the first arm (16), and **in that**, between the second arm (18) and the second slide rod (34), a second slide (36) is arranged, which is rigidly connected to the second slide rod (34) and rotatably connected to the second arm (18).

10. Device according to claim 9, **characterised in that** the first slide (28) and the second slide (36) are guided in two different guideways (30) extending parallel to each other in the transport direction (X).

11. Device according to claim 9, **characterised in that** the first slide (28) and the second slide (36) are guided in the same guideway (30) extending in the transport direction (X).

12. Device according to any of claims 2 to 11, **characterised in that** the first drive (12) and the second drive (14) are servomotors.

13. Device according to any of claims 2 to 12, **characterised in that** the retainers (4) are substantially triangular retainers (4), which widen towards the outside.

14. Device according to claim 13, **characterised in that** the two side walls of each retainer (4) enclose an angle of between 90° and 110°.

## Revendications

1. Dispositif destiné au transport linéaire de récipients verticaux (6) dans une direction de transport (X), comprenant :
une grille de poussée (2), qui présente sur un premier côté longitudinal plusieurs logements (4) ouverts vers l'extérieur, disposés en rangée les uns à côté des autres dans la direction de transport (X), pour les récipients (6), et
au moins deux systèmes d'articulation (10), chaque système d'articulation (10) présentant une première branche (16) et une seconde branche (18), qui sont assemblées respectivement de façon stationnaire, mais tournante, avec la grille de poussée (2) par l'intermédiaire d'un premier point d'assemblage (20) de la première branche (16) et par l'intermédiaire d'un premier point d'assemblage (22) de la seconde branche (18),
**caractérisé en ce que**
il est prévu un élément de contre-retenue (8) pour les récipients (6) reçus dans les logements (4), lequel élément présente une surface de contre-retenue qui s'étend dans la direction de transport (X) et est disposée en vis-à-vis du premier côté longitudinal de la grille de poussée (2),
la grille de poussée (2) étant reliée par l'intermédiaire des au moins deux systèmes d'articulation (10) à un premier entraînement (12) et à un second entraînement (14),
la première branche (16) étant assemblée en rotation, par l'intermédiaire d'un second point d'assemblage (24), avec un premier élément de déplacement (26, 28), qui peut être déplacé en va-et-vient linéaire dans la direction de transport (X) par le premier entraînement (12),
la seconde branche (18) étant assemblée en rotation, par l'intermédiaire d'un second point d'assemblage (32), avec un second élément de déplacement (34, 36), qui peut être déplacé en va-et-vient linéaire dans la direction de transport (X) par le second entraînement (14), et
le premier élément de déplacement (26, 28) et le second élément de déplacement (34, 36) étant entraînables au moyen du premier entraînement (12) et du second entraînement (14) soit pour un mouvement de même sens identique, soit pour un mouvement relatif mutuel, de sorte que la grille de poussée (2) peut être déplacée en va-et-vient aussi bien dans la direction de transport (X) des récipients (6) que perpendiculairement (Y) à la direction de transport des récipients (6).

2. Dispositif selon la revendication 1, **caractérisé en ce que** le déplacement de la grille de poussée (2) dans la direction de transport (X) pour le transport des récipients (6) et dans le sens contraire à la direction de transport (X) pour le retour de la grille de poussée (2) destiné à une nouvelle réception des récipients peut être produit par un déplacement identique du premier élément de déplacement (26, 28) et du second élément de déplacement (34, 36).

3. Dispositif selon la revendication 2, **caractérisé en ce que** le déplacement de la grille de poussée (2) perpendiculairement (Y) à la direction de transport, entre une position de fermeture et une position d'ouverture de la grille de poussée (2), peut être produit par un déplacement différent du premier élément de déplacement (26, 28) et du second élément de déplacement (34, 36).

4. Dispositif selon la revendication 3, **caractérisé en ce que**, dans la position de fermeture de la grille de poussée (2), les seconds points d'assemblage (24, 32) de la première branche (16) et de la seconde branche (18) ont une position mutuelle plus étroite que dans la position d'ouverture de la grille de poussée (2).

5. Dispositif selon l'une des revendications 3 et 4, **caractérisé en ce que** les premières branches (16) et les secondes branches (18) s'étendent de façon essentiellement rectiligne et forment entre elles un angle (α), qui s'ouvre en direction des seconds points d'assemblage (24, 32).

6. Dispositif selon la revendication 5, **caractérisé en ce que** l'angle (α) se situe dans la position de fermeture entre 50" et 80° et dans la position d'ouverture entre 70° et 100°, l'angle (α) étant toujours plus grand dans la position d'ouverture que dans la position de fermeture.

7. Dispositif selon l'une des revendications 2 à 6, **caractérisé en ce que** le premier élément de déplacement (26, 28) présente une première barre de poussée (26) et le second élément de déplacement (34, 36) présente une seconde barre de poussée (34).

8. Dispositif selon la revendication 7, **caractérisé en ce que** la première barre de poussée (26) est fixée par l'intermédiaire de moyens d'assemblage (38) sur une première courroie circulaire (40) entraînable par le premier entraînement (12), et que la seconde barre de poussée (34) est fixée par l'intermédiaire de moyens d'assemblage (38) sur une seconde courroie circulaire (42), entraînable par le second entraînement (14).

9. Dispositif selon l'une des revendications 7 et 8, **caractérisé en ce qu'**un premier chariot (28) est disposé entre la première branche (16) et la première barre de poussée (26), lequel chariot est assemblé fixement avec la première barre de poussée (26) et assemblé en rotation avec la première branche (16), et qu'un second chariot (36) est disposé entre la seconde branche (18) et la seconde barre de poussée (34), lequel chariot est assemblé fixement avec la seconde barre de poussée (34) et assemblé en rotation avec la seconde branche (18).

10. Dispositif selon la revendication 9, **caractérisé en ce que** le premier chariot (28) et le second chariot (36) sont guidés dans deux glissières (30), qui s'étendent parallèlement dans la direction de transport (X).

11. Dispositif selon la revendication 9, **caractérisé en ce que** le premier chariot (28) et le second chariot (36) sont guidés dans la même glissière (30), qui s'étend dans la direction de transport (X).

12. Dispositif selon l'une des revendications 2 à 11, **caractérisé en ce que** le premier entraînement (12) et le second entraînement (14) sont des servomoteurs.

13. Dispositif selon l'une des revendications 2 à 12, **caractérisé en ce que** les logements (4) sont des logements (4) essentiellement triangulaires, qui s'élargissent vers l'extérieur.

14. Dispositif selon la revendication 13, **caractérisé en ce que** les deux parois latérales des logements (4) forment un angle compris entre 90° et 110°.
